# EUROPEAN PATENT SPECIFICATION

(11) **EP 2 679 805 B1**
(45) Date of publication and mention of the grant of the patent: **18.02.2015**
(21) Application number: 12382266.0
(22) Date of filing: 29.06.2012
(51) Int. Cl.: F03D 11/00, F03D 7/02, F03D 1/06

(54) **Cone angle insert for wind turbine rotor**
Kegelwinkeleinsatz für Windturbinenrotor
Insert de l'angle de cône pour rotor de turbine éolienne

(43) Date of publication of application: 01.01.2014
(73) Proprietor: GENERAL ELECTRIC COMPANY, Schenectady, NY 12345 (US)
(72) Inventor: Moore, Bradley Graham, Greenville, South Carolina 29615 (US); Bagepalli, Bharat, New York, NY 12345 (US); Sivanantham, Mohan Muthu Kumar, 560066 Karnataka (IN); Yegro Segovia, Eugenio, 28027 Madrid (ES); Benito Santiago, Pedro Luis, 28027 Madrid (ES); Calle Garrido, Alvaro Jaime, 28027 Madrid (ES); Bartolome Lopez, Miguel, 28027 Madrid (ES); Zalar, Jonathan, Greenville, South Carolina 29615 (US); Gitesh, Verma, 560066 Karnataka (IN); Close, Ryan Spencer, Greenville, South Carolina 29615 (US)
(74) Representative: Bedford, Grant Richard

(56) References cited:
- EP-A1- 2 078 851
- WO-A1-03/060319
- NL-C2- 1 014 719

## Description

The present disclosure relates in general to wind turbines, and more specifically to inserts for wind turbine rotors that angle rotor blades at cone angles.

Generally, a wind turbine includes a tower, a nacelle mounted on the tower, and a rotor coupled to the nacelle. The rotor typically includes a rotatable hub and a plurality of rotor blades coupled to and extending outwardly from the hub. Each rotor blade may be spaced about the hub so as to facilitate rotating the rotor to enable kinetic energy to be transferred from the wind into usable mechanical energy, and subsequently, electrical energy.

In many cases it is generally desirable to increase the size of wind turbines, and specifically the rotor blades thereof. Increasing the size of the rotor blades increases the amount of energy that can be captured by the rotor blades. Such size increases, however, would also increase the amount by which the rotor blades can deflect during operation. Increases in deflection may lead to the rotor blades striking the tower during operation, which can damage or destroy the wind turbine.

Accordingly, various attempts have been made to reduce the risk of rotor blades striking wind turbine towers during wind turbine operation. For example, rotor blade curvature has been modified to curve the rotor blades away from the tower. However, such modifications can reduce the amount of energy that can be captured by the rotor blades. Further, rotor blades have been angled away from the tower at angles known as cone angles. For example, the hub flange connecting a rotor blade to the hub or the rotor blade root may be angled at a cone angle. Alternatively, spacers have been attached between a rotor blade and a hub, with a first flange of the spacer connected directly to the hub and a second flange connected directly to the rotor blade, that provide a cone angle. These coning attempts, however, have a variety of drawbacks. For example, angling of the hub flange or rotor blade root may stress these components and cause ovalization concerns. Use of spacers directly connected to the hub and rotor blade may similarly stress the components and cause ovalization concerns. Further, these various coning attempts may not adequately address the need to pitch the rotor blades during operation, by for example not adequately facilitating the inclusion and proper performance of bearing assemblies and bearing drive assemblies.

For example WO 03/060319 discloses a wind turbine root spacer for increasing the separation of a blade tip from the tower.

Accordingly, an improved wind turbine rotor that provides coning is desired in the art. For example, an insert that provides coning while addressing various long-felt needs as described above would be advantageous.

Various aspects and embodiments of the present invention are defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

A full and enabling disclosure of the present invention directed to one of ordinary skill in the art, is set forth in the specification, which makes reference to the appended figures, in which:
FIG. 1 illustrates a perspective view of one embodiment of a wind turbine according to the present disclosure;
FIG. 2 is a cross-sectional view of a portion of a rotor according to one embodiment of the present disclosure;
FIG. 3 is a cross-sectional view of a portion of a rotor according to another embodiment of the present disclosure;
FIG. 4 is a cross-sectional view of a portion of a rotor according to another embodiment of the present disclosure;
FIG. 5 is a cross-sectional view of a portion of a rotor according to another embodiment of the present disclosure;
FIG. 6 is a perspective view of an insert according to one embodiment of the present disclosure;
FIG. 7 is a perspective view of an insert according to another embodiment of the present disclosure;
FIG. 8 is a side view of an insert according to one embodiment of the present disclosure;
FIG. 9 is a side view of an insert according to another embodiment of the present disclosure; and,
FIG. 10 is a side view of an insert according to another embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

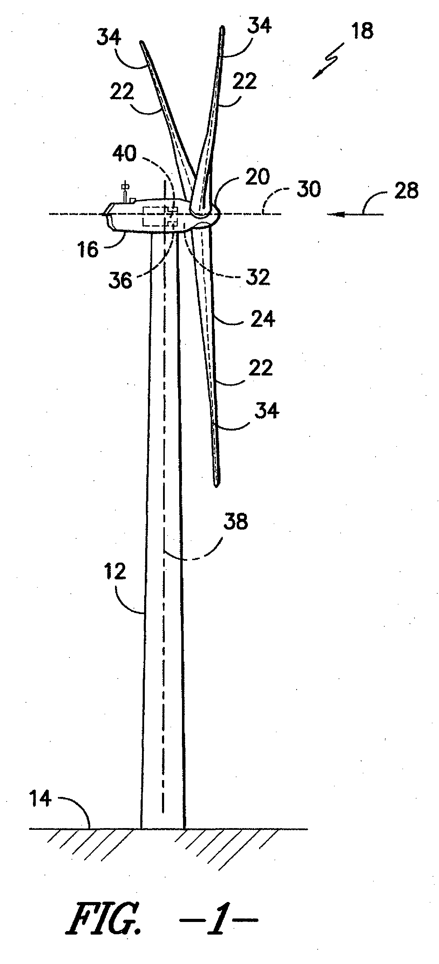

FIG. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support surface 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in FIG. 1) between support surface 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. In one embodiment, rotor blades 22 have a length ranging from about 15 meters (m) to about 91 m. Alternatively, rotor blades 22 may have any suitable length that enables wind turbine 10 to function as described herein. For example, other non-limiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position. Moreover, a pitch angle or blade pitch of rotor blades 22, i.e., an angle that determines a perspective of rotor blades 22 with respect to direction 28 of the wind, may be changed to control the load and power generated by wind turbine 10 by adjusting an angular position of at least one rotor blade 22 relative to wind vectors. Pitch axes 34 for rotor blades 22 are shown. Such pitching (of blades individually and in combination) and otherwise adjusting of the rotor blades 22 and wind turbine 10 can decrease loading in both the blades 22 as well as in other components of the wind turbine 10. For example, torque and bending loads in a main shaft connecting the rotor 18 and a generator (discussed below) may be reduced, and bending of the tower 12 may be reduced. This can increase the life of these components and/or reduce the costs associated with wind turbine 10 design and operation.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In FIG. 1, control system 36 is shown as being centralized within nacelle 16, however, control system 36 may be a distributed system throughout wind turbine 10, on support surface 14, central to a plurality of wind turbines 10 in a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

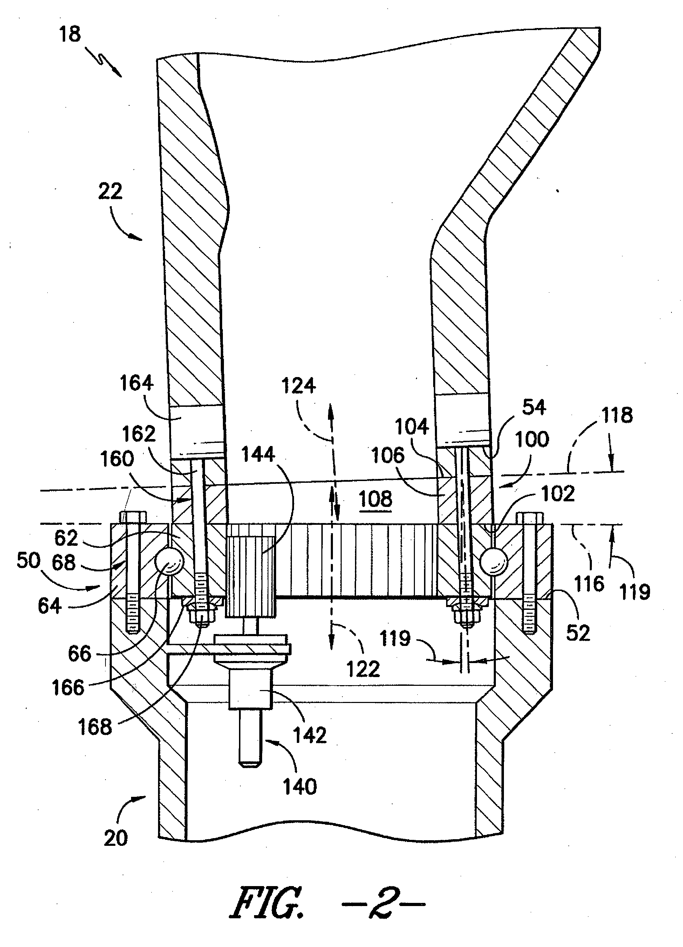

FIGS. 2 through 10 illustrate various embodiments of various rotor 18 components according to the present disclosure. As discussed, a rotor 18 according to the present disclosure includes a hub 20 and one or more rotor blades 22. As shown, a rotor 18 further includes one or more bearing assemblies 50. Each bearing assembly 50 may be configured to rotate a rotor blade 22 with respect to a hub 20, such as about a pitch axis 34 as discussed above. Thus, a bearing assembly 50 may be disposed between a hub flange 52 of a hub 20 and a root 54 of a rotor blade 22. As shown, a bearing assembly 50 according to some embodiments may include an inner race 62, an outer race 64, and a plurality of bearing elements 66, such as balls, therebetween. The outer race 64 may be coupled to the hub 20, such as to the hub flange 52 thereof, by a plurality of mechanical fasteners 68. Any suitable mechanical fastener, such as a bolt-barrel nut combination, bolt-nut combination, screw, nail, rivet, or other suitable mechanical fastening device, may be utilized in accordance with the present disclosure. The inner race 62 may rotate with respect to outer race 64 to rotate the rotor blade 22. Alternatively, any suitable bearing assembly 50 may be utilized in accordance with the present disclosure to rotate a rotor blade 22 with respect to a hub 20.

As shown, a rotor 18 according to the present disclosure further includes an insert 100. An insert 100 according to the present disclosure is, in exemplary embodiments, a generally annular or cylindrical component of the rotor 18. The insert 100 is coupled to the and between the hub 20 and the bearing assembly 50. An insert 100 according to the present disclosure orients an associated rotor blade 22 at a cone angle, and further may provide additional advantageous characteristics to the rotor 18. For example, the insert 100 may include stiffening components and/or may be configured to reduce or prevent the risk of ovalization during operation. Further, the insert 100 may address and reduce stress concerns.

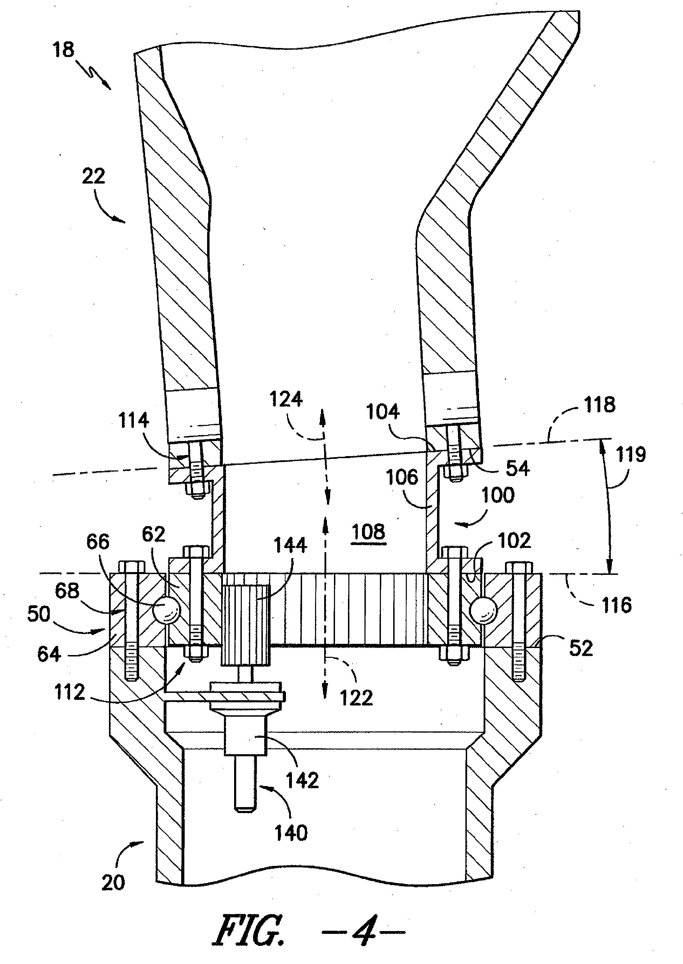

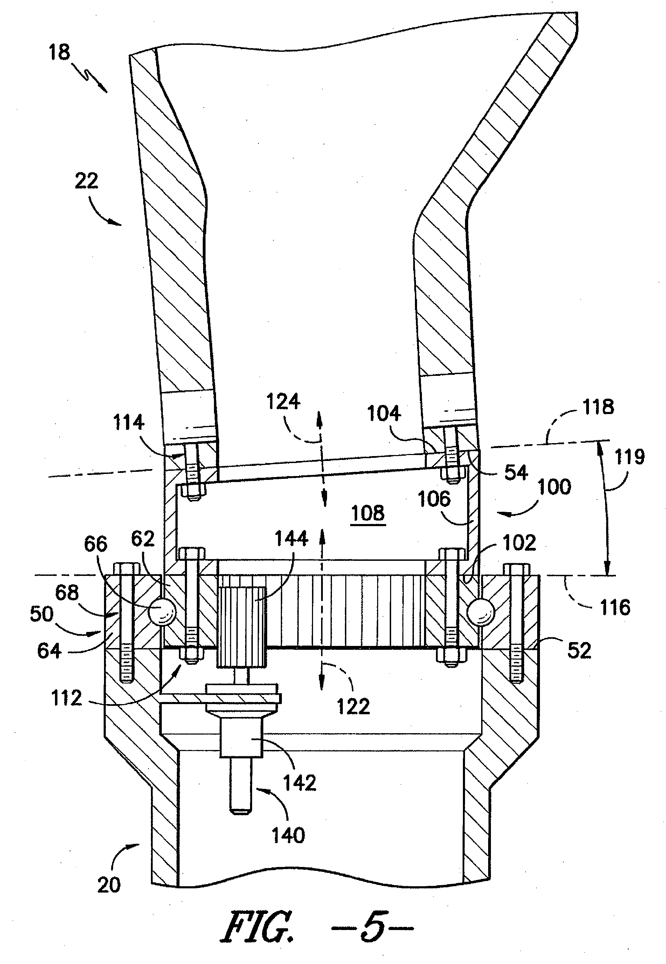

An insert 100 according to the present disclosure may include, for example, a first end 102, a second end 104, and a body 106 extending therebetween. The body 106 may be generally hollow, and thus define an interior 108 therein. As discussed, the body 106 in exemplary embodiments is generally cylindrical. The first end 102 may be coupled to the bearing assembly 50, such as to the inner race 62 thereof. Thus, for example, the first end 102 may be a first flange that mates to the bearing assembly 50. In some embodiments, as shown in FIGS. 4 and 5, one or more mechanical fasteners 112 may extend through the first end 102 and the bearing assembly 50 to couple the first end 102 and bearing assembly 50 together. The second end 104 may be coupled to the rotor blade 22. Thus, for example, the second end 104 may be a second flange that mates to the rotor blade 22, such as to the root 54 thereof. In some embodiments, as shown in FIGS. 4 and 5, one or more mechanical fasteners 114 may extend through the second end 104 and the rotor blade 22 to couple the second end 104 and rotor blade 22 together. The mechanical fasteners 112, 114 in exemplary embodiments are nut-bolt combinations, but in other embodiments may be any suitable mechanical fastener as discussed herein. In other embodiments, the first end 102 and second end 104 may be respectively coupled to the hub 20 and bearing assembly 50 by, for example, welding or any other suitable coupling process or apparatus.

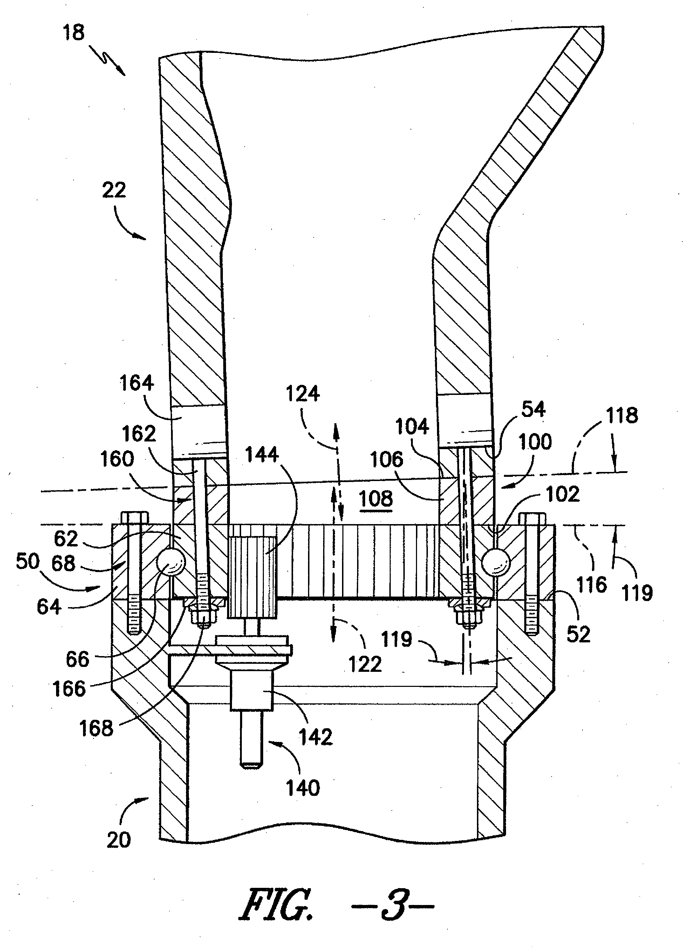

In other exemplary embodiments, as shown in FIGS. 2 and 3, a plurality of mechanical fasteners 160 may extend through and couple together the bearing assembly 50, insert 100, and rotor blade 22. Each mechanical fastener 160 may thus extend through each of the bearing assembly 50, insert 100, and rotor blade 22, as shown. Further, in some embodiments as shown, the mechanical fasteners 160 may extend through the rotor blade 22 at a cone angle, as discussed below. In exemplary embodiments, for example, a mechanical fastener 160 may include a nut-bolt combination. Specifically, the mechanical fastener 160 according to some embodiments includes a bolt 162 and a barrel nut 164. The barrel nut 164 is positioned in the rotor blade 22, and the bolt 162 extends through the bearing assembly 50, such as the inner race 62 thereof, through the insert 100, and through the root 54 of the rotor blade 22 to couple with the barrel nut 164. In some embodiments, the mechanical fastener 160 further includes a washer, which in exemplary embodiments is a self-aligning washer 166. The washer 166 may, for example, be disposed between a head 168 of the bolt 162 and the bearing assembly 50, such as the inner race 62 thereof, or other suitable rotor component. Because the washer 166 is self-aligning, the bolt 162 may be allowed to extend through the bearing assembly 50, insert 100, and rotor blade 22 at an angle to various of the components, in order to accommodate a cone angle, as discussed below, provided to the rotor blade 22 by the insert 100. The self-aligning washer 166 may allow the bolt 162, and specifically the head 168 thereof, to seat properly with the bearing assembly 50 while extending at an angle to the bearing assembly 50, as shown.

The first end 102 defines a first plane 116, and the second end 104 similarly defines a second plane 118. As shown, the second plane 118 is oriented at a cone angle 119 with respect to the first plane 116. A cone angle 119 is in some embodiments between approximately 0.1 degrees and approximately 5 degrees, in other embodiments between approximately 0.5 degrees and approximately 5 degrees, in other embodiments between approximately 1 degree and approximately 5 degrees, in other embodiments between approximately 1 degree and approximately 4 degrees. Thus, an insert 100 according to the present disclosure advantageously orients an associated rotor blade 22 at a cone angle 119.

As discussed, mechanical fasteners 114 and 116 or 160 may couple the first end 102 and second end 104 to the bearing assembly 50 and rotor blade 22. In some embodiments, as shown in FIG. 4, the mechanical fasteners 114 and/or 116 may be accessible externally of the insert 100. In these embodiments, the mechanical fasteners 114 and/or 116 are not contained in the interior 108 or the body 106 itself, but rather extend through the first end 102 and/or second end 104 from outside of the insert 100. Such configuration allows for rotor maintenance from outside of the insert 100 without need to access the interior 108. In other embodiments, as shown in FIG. 5, the mechanical fasteners 114 and/or 116 may be accessible from the interior 108 of the insert 100. In these embodiments, the mechanical fasteners 114 and/or 116 extend through the first end 102 and/or second end 106 from the interior 108, and the body 106 generally surrounds those portions of the mechanical fasteners 114 and/or 116 in the interior. Such configuration allows for rotor maintenance from inside of the insert 100 without need to access the exterior of the insert. In still other embodiments, as shown in FIGS. 2 and 3, the mechanical fasteners 114, 116, and/or 160 may be accessible only from the first end 102 and/or second end 106, and may thus extend through the body 106.

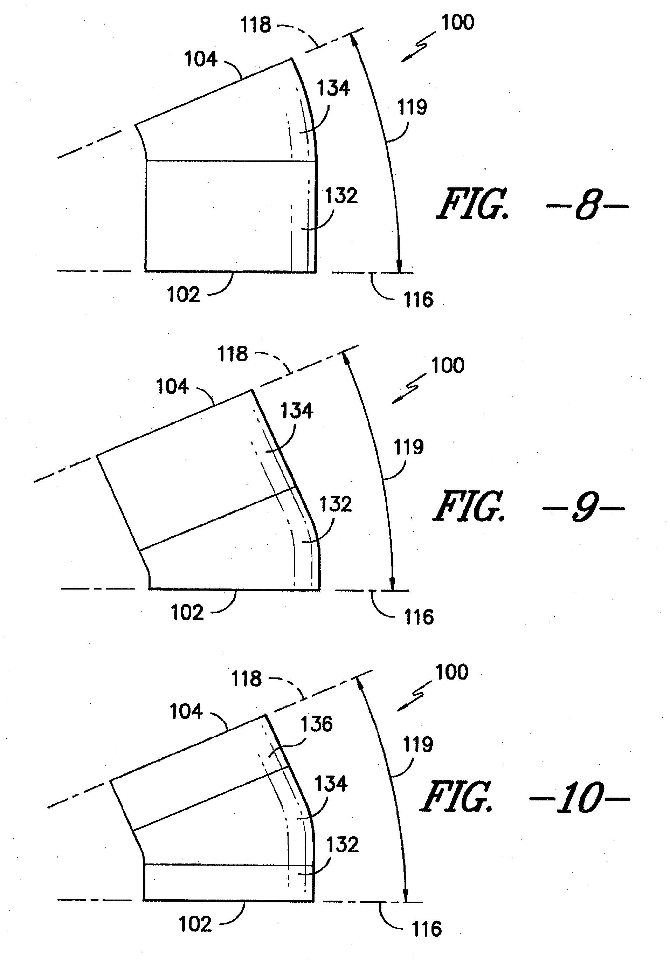

As discussed, the body 106 of the insert 100 extends between the first end 102 and the second end 104. The body 106 may, for example, extend along a central axis. In some embodiments, the axis 122 is perpendicular to the first plane 116, as shown for example in FIGS. 2 and 4. In other embodiments, the axis 124 is perpendicular to the second plane 118, as shown for example in FIGS. 3 and 5. In other embodiments, as shown in FIGS. 8 through 10 and discussed below, portions of the body 106 may extend along axis 122 while other portions extend along axis 124.

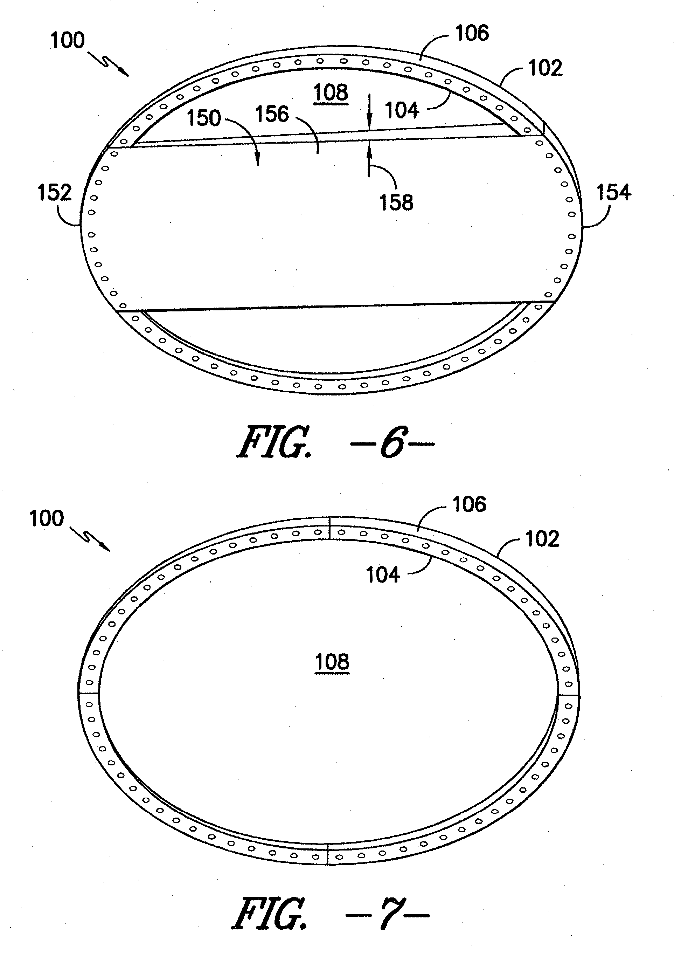

The insert 100 in some embodiments may include one or more webs 150. Each web 150 may extend through at least a portion of the interior 108 of an insert 100. A web 150 according to the present disclosure may include a first end 152, a second end 154, and a body 156 extending therebetween. As shown in FIGS. 2 through 6, in exemplary embodiments both the first end 152 and the second end 154 are coupled to the body 106. The web 150 in these embodiments thus extends across the entire interior 108 of the insert 100. Further, in these embodiments, the web 150 further stiffens the insert 100, providing improved stress characteristics and reducing ovalization during operation. Alternatively, however, a web may be cantilevered. In these embodiments, only one of the first end 152 and the second end 154 is coupled to the body 106 of the insert 100, while the other is free in the interior 108 of the insert 100. Still further, in some embodiments as shown in FIG. 7, an insert 100 according to the present disclosure need not include a web 150.

A web 150, such as a thickness 158 thereof, may further in some embodiments taper. For example, a web 150, such as the thickness 158 thereof, may taper between the first end 152 and the second end 154. This tapering may, as shown in FIG. 6, be at the cone angle 119 to facilitate angling of the rotor blade 22 at the cone angle 119 while the web simultaneously provides additional stiffening characteristics to the insert 100.

The body 106 of an insert 100 according to the present disclosure is in some embodiments formed as a single unitary component, as shown for example in FIGS. 2 through 5. In other embodiments, the body 106 may be formed from multiple separate components that are coupled together by, for example, mechanical fasteners, welding, or any other suitable coupling process or apparatus. FIGS. 6 through 10 illustrate various embodiments of multiple component bodies 106.

As shown in FIG. 6, for example, a web 150 of an insert 100 may be segmented from the body 106 of the insert 100. As further shown in FIGS. 6 and 7, the body 106 may be segmented into a plurality of body sections that, when placed together, form an entire periphery of the body 106. For example, FIG. 6 illustrates two body sections, while FIG. 7 illustrates four body sections. It should be understood, however, that, three, five, six, seven, eight, or more body sections are within the scope and spirit of the present disclosure. Segmenting of the insert 100 as shown may advantageously allow for ease of assembly of the rotor 18.

As shown in FIG. 8, for example, a body 106 may include a first portion 132 and a second portion 134. The first portion 132 may extend along axis 122 perpendicular to the first plane 116. The second portion 134 may be an elbow portion. An elbow portion is at least partially curved to at least partially provide a transition for the body 106 from extending along axis 122 to extending along axis 124. In the embodiment as shown, the first portion 132 includes the first end 102, and the second portion 134 includes the second end 104.

As shown in FIG. 9, for example, a body 106 may include a first portion 132 and a second portion 134. The first portion 132 may be an elbow portion. The second portion 134 may extend along axis 124 perpendicular to the second plane 118. In the embodiment as shown, the first portion 132 includes the first end 102, and the second portion 134 includes the second end 104.

As shown in FIG. 10, for example, a body 106 may include a first portion 132, a second portion 134, and a third portion 136. The first portion 132 may extend along axis 122 perpendicular to the first plane 116. The second portion 134 may be an elbow portion. The third portion 136 may extend along an axis 124 perpendicular to the second plane 118. In the embodiment as shown, the first portion 132 includes the first end 102, and the third portion 136 includes the second end 104.

Bodies formed from multiple components as discussed above may provide various advantages. For example, the use of multiple portions allows the rotor blade 22 to be shifted further from the tower 12 which, along with the coning angle, may further reduce the risk of contact with the tower 12. Further, the use of an elbow portion may allow for the interface between the components to be circular, rather than oval. This may provide advantageous stress characteristics, and may serve to reduce ovalization during operation.

A rotor 18 according to the present disclosure further includes one or more bearing drive assemblies 140. Each bearing drive assembly 140 according is associated with a rotor blade 22, and drives the bearing assembly 50 associated with that rotor blade 22 to rotate the rotor blade 22, such as about a pitch axis 34 as discussed above. A bearing drive assembly 140 may include, for example, a motor 142 and a gear 144. The motor 142 may rotationally drive the gear 144. Teeth of the gear 144 may mesh with the bearing assembly 50, such as with an inner race 62 thereof, and may rotate, thus rotating the bearing assembly 50 and the rotor blade 22 coupled thereto.

This written description uses examples to disclose the invention to enable any person skilled in the art to practice the invention, including making and using any devices or systems and performing any incorporated methods. The patentable scope of the invention is defined by the claims, and may include other examples that occur to those skilled in the art.

## Claims

1. A rotor (18) for a wind turbine (10), comprising:
a hub (20);
a rotor blade (22);
a bearing assembly (50) configured to rotate the rotor blade (22) with respect to the hub (20);
an insert (100), the insert (100) comprising a first end (102), a second end (104), and a body (106) extending therebetween, the first end (102) coupled to the bearing assembly (50) and the second end (104) coupled to the rotor blade (22), the second end (104) defining a second plane (118) oriented at a cone angle (119) with respect to a first plane (116) defined by the first end (102); and
a plurality of mechanical fasteners (160) extending through and coupling together the bearing assembly (50), the insert (100), and the rotor blade (22), **characterised in that** each of the plurality of mechanical fasteners (160) comprises a self-aligning washer (166).

2. The rotor (18) of claim 1, wherein each of the plurality of mechanical fasteners (160) further comprises a bolt (162) and a barrel nut (164).

3. The rotor (18) of claim 1 or claim 2, wherein each of the plurality of mechanical fasteners (160) extends through the rotor blade (22) at the cone angle (119).

4. The rotor (18) of any preceding claim, the plurality of mechanical fasteners (160) being accessible externally of the insert (100).

5. The rotor (18) of claim 1, 2 or 3, the plurality of mechanical fasteners (160) being accessible from an interior of the insert (100).

6. The rotor (18) of any preceding claim, wherein the insert (100) further comprises a web (150) extending through an interior of the insert (100) and comprising a first end (152), a second end (154), and a body (156) extending therebetween, and wherein the first end (152) and the second end (154) of the web (150) are coupled to the body (156).

7. The rotor (18) of claim 6, wherein the web (150) tapers between the first end (152) and the second end (154).

8. The rotor (18) of any preceding claim, wherein the body (106) of the insert (100) extends along an axis extending perpendicular to the first plane.

9. The rotor (18) of any preceding claim, wherein the body (106) of the insert (100) extends along an axis extending perpendicular to the second plane.

10. The rotor (18) of any preceding claim, wherein the body (106) comprises a first portion extending along an axis extending perpendicular to the first plane (116) and a second elbow portion.

11. The rotor (18) of any preceding claim, wherein the body (106) comprises a first elbow portion and a second portion extending along an axis extending perpendicular to the second plane.

12. The rotor (18) of any preceding claim, wherein the body (106) comprises a first portion extending along an axis extending perpendicular to the first plane, a second elbow portion, and a third portion extending along an axis extending perpendicular to the second plane.

13. A wind turbine (10), comprising:
a tower (12);
a nacelle (16) mounted to the tower (12);
a rotor (18) coupled to the nacelle (16), the rotor (18) being as per any preceding claim.

## Patentansprüche

1. Rotor (18) für eine Windenergieanlage (10), die Folgendes umfasst:
eine Nabe (20);
eine Rotorschaufel (22);
eine Lageranordnung (50), die konfiguriert ist, die Rotorschaufel (22) im Verhältnis zur Nabe (20) zu drehen;
einen Einsatz (100), wobei der Einsatz (100) ein erstes Ende (102), ein zweites Ende (104) und ein sich zwischen diesen erstreckendes Gehäuse (106) umfasst, wobei das erste Ende (102) mit der Lageranordnung (50) verbunden ist und das zweite Ende (104) mit der Rotorschaufel (22) verbunden ist, wobei das zweite Ende (104) eine zweite Ebene (118) definiert, die in Bezug zu einer durch das erste Ende (102) definierten ersten Ebene (116) in einem Kegelwinkel (119) ausgerichtet ist; und
mehrere mechanische Befestigungselemente (160), die sich durch die Lageranordnung (50), den Einsatz (100) und die Rotorschaufel (22) erstrecken und diese miteinander verbinden, **dadurch gekennzeichnet, dass** jedes der mehreren Befestigungselemente (160) einen selbstjustierenden Dichtungsring (166) aufweist.

2. Rotor (18) nach Anspruch 1, wobei jedes der mehreren Befestigungselemente (160) ferner einen Bolzen (162) und eine Zylindermutter (164) umfasst.

3. Rotor (18) nach Anspruch 1 oder 2, wobei sich jedes der mehreren Befestigungselemente (160) in einem Kegelwinkel (119) durch die Rotorschaufel (22) erstreckt.

4. Rotor (18) nach einem der vorhergehenden Ansprüche, wobei die mehreren Befestigungselemente (160) von außerhalb des Einsatzes (100) zugänglich sind.

5. Rotor (18) nach Anspruch 1, 2 oder 3, wobei die mehreren Befestigungselemente (160) von einer Innenseite des Einsatzes (100) aus zugänglich sind.

6. Rotor (18) nach einem der vorhergehenden Ansprüche, wobei der Einsatz (100) ferner einen Steg (150) umfasst, der sich durch eine Innenseite des Einsatzes (100) erstreckt und ein erstes Ende (152), ein zweites Ende (154) und ein sich zwischen diesen erstreckendes Gehäuse (156) umfasst, und wobei das erste Ende (152) und das zweite Ende (154) des Stegs (150) mit dem Gehäuse (156) verbunden sind.

7. Rotor (18) nach Anspruch 6, wobei sich der Steg (150) zwischen dem ersten Ende (152) und dem zweiten Ende (154) verjüngt.

8. Rotor (18) nach einem der vorhergehenden Ansprüche, wobei sich das Gehäuse (106) des Einsatzes (100) entlang einer Achse erstreckt, die senkrecht zur ersten Ebene ist.

9. Rotor (18) nach einem der vorhergehenden Ansprüche, wobei sich das Gehäuse (106) des Einsatzes (100) entlang einer Achse erstreckt, die senkrecht zur zweiten Ebene ist.

10. Rotor (18) nach einem der vorhergehenden Ansprüche, wobei das Gehäuse (106) einen ersten Abschnitt, der sich entlang einer senkrecht zur ersten Ebene (116) verlaufenden Achse erstreckt, und einen zweiten angewinkelten Abschnitt umfasst.

11. Rotor (18) nach einem der vorhergehenden Ansprüche, wobei das Gehäuse (106) einen ersten angewinkelten Abschnitt und einen zweiten angewinkelten Abschnitt, der sich entlang einer senkrecht zur zweiten Ebene verlaufenden Achse erstreckt, umfasst.

12. Rotor (18) nach einem der vorhergehenden Ansprüche, wobei das Gehäuse (106) einen ersten Abschnitt, der sich entlang einer senkrecht zur ersten Ebene verlaufenden Achse erstreckt, einen zweiten angewinkelten Abschnitt und einen dritten Abschnitt, der sich entlang einer senkrecht zur zweiten Ebene verlaufenden Achse erstreckt, umfasst.

13. Windenergieanlage (10), die Folgendes umfasst:
einen Mast (12);
eine am Mast (12) montierte Gondel (16);
einen mit der Gondel (16) verbundenen Rotor (18) nach einem der vorhergehenden Ansprüche.

## Revendications

1. Rotor (18) pour une turbine d'éolienne (10),
comprenant :
un moyeu (20) ;
une pale de rotor (22) ;
un ensemble de paliers (50) configuré pour faire tourner la pale de rotor (22) par rapport au moyeu (20) ;
un insert (100), l'insert (100) comprenant une première extrémité (102), une seconde extrémité (104) et un corps (106) s'étendant entre elles, la première extrémité (102) étant couplée à l'ensemble de paliers (50) et la seconde extrémité (104) étant couplée à la pale de rotor (22), la seconde extrémité (104) définissant un second plan (118) orienté selon un angle de cône (119) par rapport à un premier plan (116) défini par la première extrémité (102) ; et
une pluralité d'attaches mécaniques (160) s'étendant à travers l'ensemble de paliers (50), l'insert (100) et la pale de rotor (22) qu'elles couplent conjointement, **caractérisé en ce que** chacune de la pluralité d'attaches mécaniques (160) comprend une rondelle d'auto-alignement (166).

2. Rotor (18) selon la revendication 1, dans lequel chacune de la pluralité d'attaches mécaniques (160) comprend en outre un boulon (162) et un écrou de tension (164).

3. Rotor (18) selon la revendication 1 ou la revendication 2, dans lequel chacune de la pluralité d'attaches mécaniques (160) s'étend à travers la pale de rotor (22) sous l'angle de cône (119).

4. Rotor (18) selon l'une quelconque des revendications précédentes, la pluralité d'attaches mécaniques (160) étant accessibles de l'extérieur de l'insert (100).

5. Rotor (18) selon la revendication 1, 2 ou 3, la pluralité d'attaches mécaniques (160) étant accessibles de l'intérieur de l'insert (100).

6. Rotor (18) selon l'une quelconque des revendications précédentes, dans lequel l'insert (100) comprend en outre une âme (150) s'étendant à travers l'intérieur de l'insert (100) et comprenant une première extrémité (152), une seconde extrémité (154) et un corps (156) s'étendant entre elles, et dans lequel la première extrémité (152) et la seconde extrémité (154) de l'âme (150) sont couplées au corps (156).

7. Rotor (18) selon la revendication 6, dans lequel l'âme (150) s'amincit entre la première extrémité (152) et la seconde extrémité (154).

8. Rotor (18) selon l'une quelconque des revendications précédentes, dans lequel le corps (106) de l'insert (100) s'étend le long d'un axe s'étendant perpendiculairement au premier plan.

9. Rotor (18) selon l'une quelconque des revendications précédentes, dans lequel le corps (106) de l'insert (100) s'étend le long d'un axe s'étendant perpendiculairement au second plan.

10. Rotor (18) selon l'une quelconque des revendications précédentes, dans lequel le corps (106) comprend une première portion s'étendant le long d'un axe s'étendant perpendiculairement au premier plan (116) et une seconde portion coudée.

11. Rotor (18) selon l'une quelconque des revendications précédentes, dans lequel le corps (106) comprend une première portion coudée et une seconde portion s'étendant le long d'un axe s'étendant perpendiculairement au second plan.

12. Rotor (18) selon l'une quelconque des revendications précédentes, dans lequel le corps (106) comprend une première portion s'étendant le long d'un axe s'étendant perpendiculairement au premier plan, une deuxième portion coudée et une troisième portion s'étendant le long d'un axe s'étendant perpendiculairement au second plan.

13. Turbine d'éolienne (10), comprenant :
une tour (12) ;
une nacelle (16) montée sur la tour (12) ;
un rotor (18) couplé à la nacelle (16), le rotor (18) étant conforme à l'une quelconque des revendications précédentes.
